# EUROPEAN PATENT APPLICATION

(11) **EP 1 551 176 A2**
(43) Date of publication of application: **06.07.2005**
(21) Application number: 04030161.6
(22) Date of filing: 20.12.2004
(51) Int. Cl.: H04N 5/445

(54) **Broadcast receiving device and display method for broadcast receiving device**

(30) Priority: 25.12.2003 JP 2003431030
(71) Applicant: Kabushiki Kaisha Toshiba, Tokyo 105-8001 (JP)
(72) Inventor: Hirota, Atsushi Toshiba Corporation, Tokyo 105-8001 (JP)
(74) Representative: Henkel, Feiler & Hänzel

(57) **Abstract**

A broadcast receiving device has a receiving unit (11, 12, 13) which receives and modulates broadcast signals and outputs encoded signals, an acquiring unit (11, 12, 15, 22) which acquires program information relating to the broadcast signals, a detecting unit (22) which detects information indicating whether or not downloading is necessary for each content from the program information, a determining device (15, 16, 20) which determines whether or not the broadcast receiving device has the capability for downloading the content, and a display control unit (14) which outputs video signals of the program information screen (FIG. 4) to which the information indicating whether or not there downloading is necessary and information indicating whether or not there is downloading capability are added, and the user determines whether or not downloading is possible from an EPG screen and the like.

## Description

An embodiment of present invention is a broadcast receiving device that handles program information used in an EPG (Electronic Program Guide) and the like, and a display method for the broadcast receiving device. In particular, this invention relates mainly to a broadcast receiving device and a display method for the broadcast receiving device, for displaying program information along with a display indicating whether or not content downloading is possible.

In the broadcast receiving device, due to recent increased capacity of storage devices including an HDD, use of these storage devices for storage of large volume content such as video has become possible.
For this reason, use of these storage devices is being considered in broadcasting services, not only for conventional stream type broadcasting which is based on real-time viewing, but also for high function broadcasting service which is called download-type broadcasting system based on home servers", which is based on the storage function of broadcast receiving devices.

Also, as the broadband environment in households is becoming more popular, it has become possible to distribute large volume content including moving pictures in communication.

It must be noted that in communication, the stream type (streaming) and download type have existed in the past. This is because the main target for content distribution service in communication has been only a PC in which a large volume storage device such as an HDD was a standard feature.

If attention is paid to the form of content distribution as above, streaming and downloading will be provided in parallel, whether a content is distributed via broadcast or via communication for future broadcast receiving devices. However, unlike the PC, the broadcast receiving devices for all TV/STBs (Set Top Boxes) for example, do not necessarily have a storage function such as an HDD. Thus, in broadcast receiving devices, the stream type and download type distribution services must be sharply separated, and in the case where storage and-receiving functions cannot be used, appropriate processing is necessary.

In addition, in the home use environment, the broadcast receiving device is not necessarily always connected to communication, and thus the content , distribution service via communication cannot always be received.

However, in ARIB STD_B10 ver 3.7 "program arrangement information standards specification used in digital broadcasts", a field called (service_type) is defined, and image and audio are both subjected to multiplex transmission using signal formats called PSI/SI. In this field, "data service for storage" is defined. However, the field itself is for indicating service forms such as TV/audio/data and the like, and can be assigned only to each of the broadcast channel units, and cannot be used as it is for determining whether or not a storage function is necessary for each program via broadcasting and distribution contents by communication. Furthermore, in the same manner, a 2-bit field called digital copy control information (CCI) is defined at the PSI/SI, and information indicating "copying freely possible without restricted conditions", "Copy one generation", and "Never copy" can be specified and sent for the program or service. However, this field indicates whether or not content storage is possible at the sending side, but does not specify whether or not a storage function is necessary for the broadcast receiving device.

Also, in this specification, there is no distinguishing information for specifying whether or not a communication function is necessary. For this reason, in broadcast receiving devices in which the storage functions or the communications functions cannot be used, when the user selectively uses the distribution content via broadcasting or via communication, a determination cannot be made as to whether it is a stream type content that is useable in the broadcast receiving device, and even if this determination can be made, it is complicated and inefficient, and this tendency is more outstanding as the volume of content provided becomes larger.

Meanwhile, an EPG (Electronic Program Guide) function is known as a method for simply displaying the program information of the broadcast programs to the user, and broadcast receiving devices in which program and service related information (simply referred to as program information hereinafter) is displayed on the screen is also known.

Patent Document 1 (Jpn. Pat. Appln. KOKAI Publication No. 2000-4178) shows a broadcast receiving device in which program information is obtained, and many types of screens are displayed based on this, and suitable program information can be used in accordance with user desire.

However, in the prior art of Patent Document 1 described above, there is no function for displaying information related to content that needs to be downloaded nor information for determining whether the broadcast receiving device can download this content in the end. Thus, there is problem that the screen is displayed on an EPG or the like based on the program information, and determination and operation for downloading and the like of each content is difficult using this.

An object of this invention is to provide a broadcast receiving device which can display information indicating download necessity which shows whether or not a storage function is necessary for receiving, decoding and playing the content and information indicating whether or not there is a download function which determines whether or not there is a function for downloading content in accordance with the communication function or storage function of the broadcast receiving device on an EPG screen and the like which is based on program information, as well as a display method for this broadcast receiving device.

A broadcast receiving device according to the present invention comprises: a receiving unit which receives and demodulates broadcast signals and outputs encoded signals; an acquiring unit which acquires program information relating to the broadcast signals received at the receiving unit; a detecting unit which detects storage function necessity information which indicates whether storage function is required at the receiver for receiving and using the content for each item of program information; a determining device which determines whether or not the broadcast receiving device has a capability required for downloading the contents; and a display control unit which outputs video signals of the program information screen to which the storage function necessity information detected by the detecting unit and the download capability information from the determining unit is added to each content.

In the broadcast receiving device of this invention, information indicating whether downloading is necessary for receiving, decoding and playing each content on the broadcast program screen based on the program information is displayed, and also information is displayed indicating whether the content can be received by downloading and used, using the communication capability and recording capability (storage capacity and the like) of the broadcast receiving device. Also, at this time, whether or not downloading is necessary and whether or not a downloading function is present are displayed using different fonts or background colors in the program display screen such that this information can be intuitively recognized. As a result, when the user performs operations such as reserved programs from the screen, the user can easily determine whether or not it is possible to receive and use each contents by downloading.

Also in this case, by simply clicking a predetermined content region on the broadcast program screen for program information, downloading of content for which downloading is necessary and also possible can begin quickly as a result of an intuitive operation if a program is provided in the control region for starting downloading.

This summary of the invention does not necessarily describe all necessary features so that the invention may also be a sub-combination of these described features.

The invention can be more fully understood from the following detailed description when taken in conjunction with the accompanying drawings, in which:
FIG. 1 is a block diagram showing an example of a configuration of a broadcast receiving device according to one embodiment of the invention;
FIG. 2 is a flowchart showing an example of the processing operation of the broadcast receiving device according to one embodiment of the invention;
FIG. 3 is an example of an EPG display of program information of the broadcast receiving device according to one embodiment of the invention;
FIG. 4 is another example of the EPG display of program information of the broadcast receiving device according to one embodiment of the invention;
FIG. 5 is a flowchart showing an example of the processing operation for checking a communication function of the broadcast receiving device according to one embodiment of the invention;
FIG. 6 is a flowchart showing an example of the processing operation for downloading in the broadcast receiving device according to one embodiment of the invention;
FIG. 7 shows another example of the EPG display in which the program information of the broadcast receiving device according to one embodiment of the invention is classified into broadcast and communication; and
FIGS. 8A and 8B show an example of the EPG display which indicates whether or not content receiving and use is possible for the program information of the broadcast receiving device according to one embodiment of the invention.

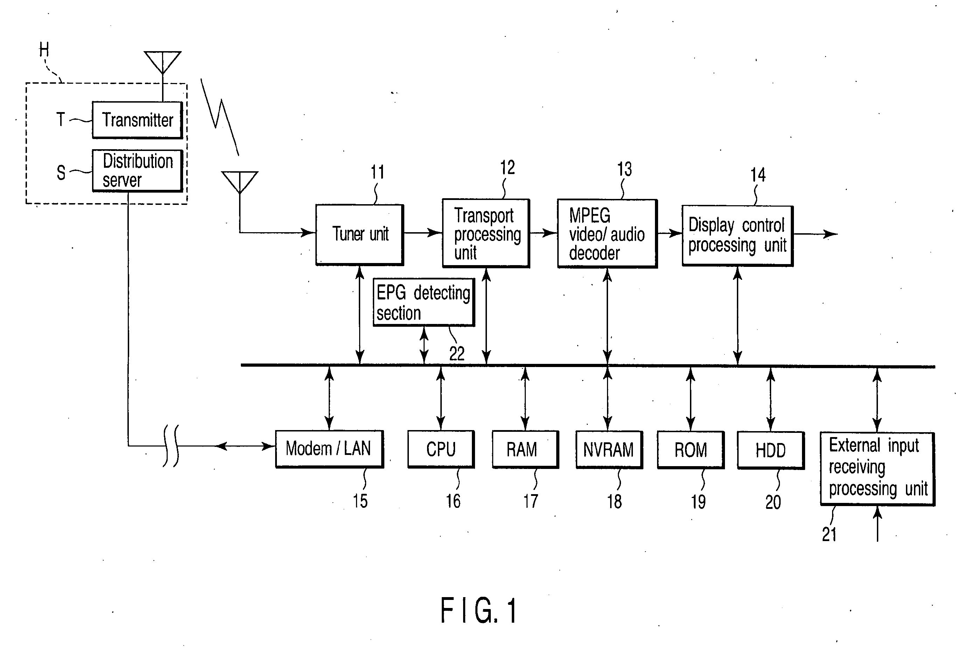

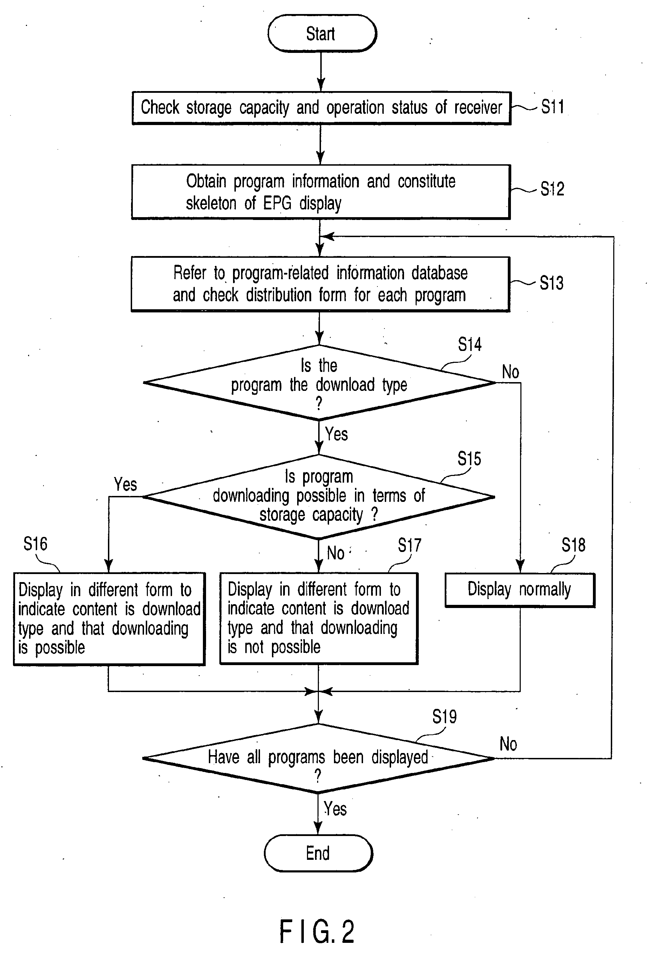

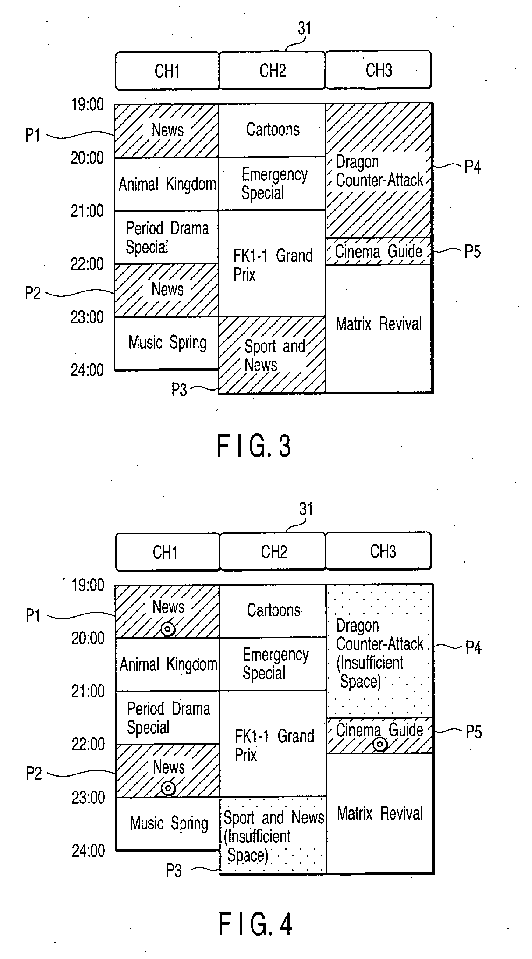

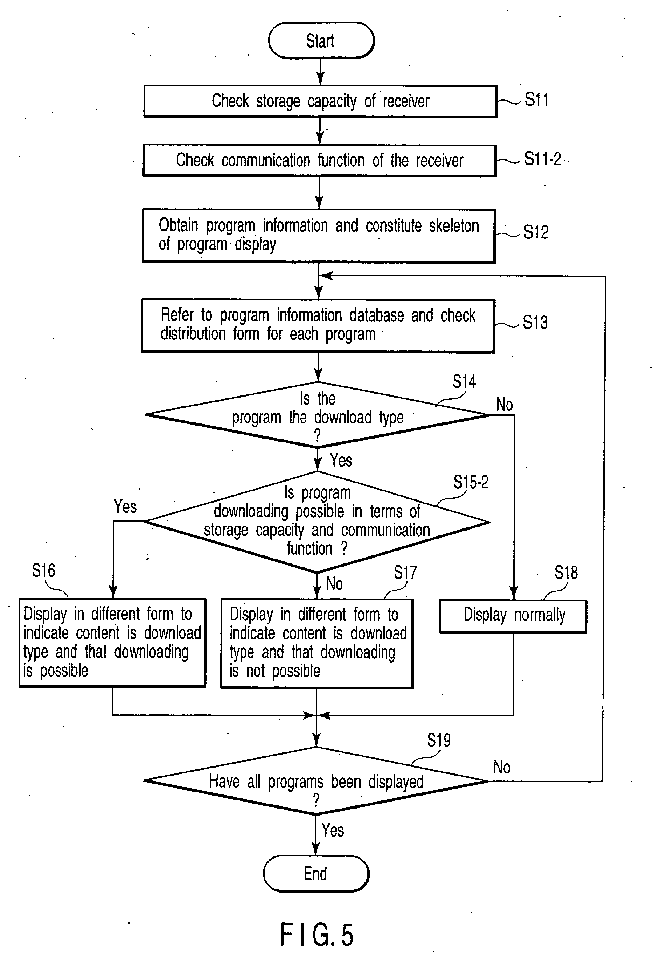

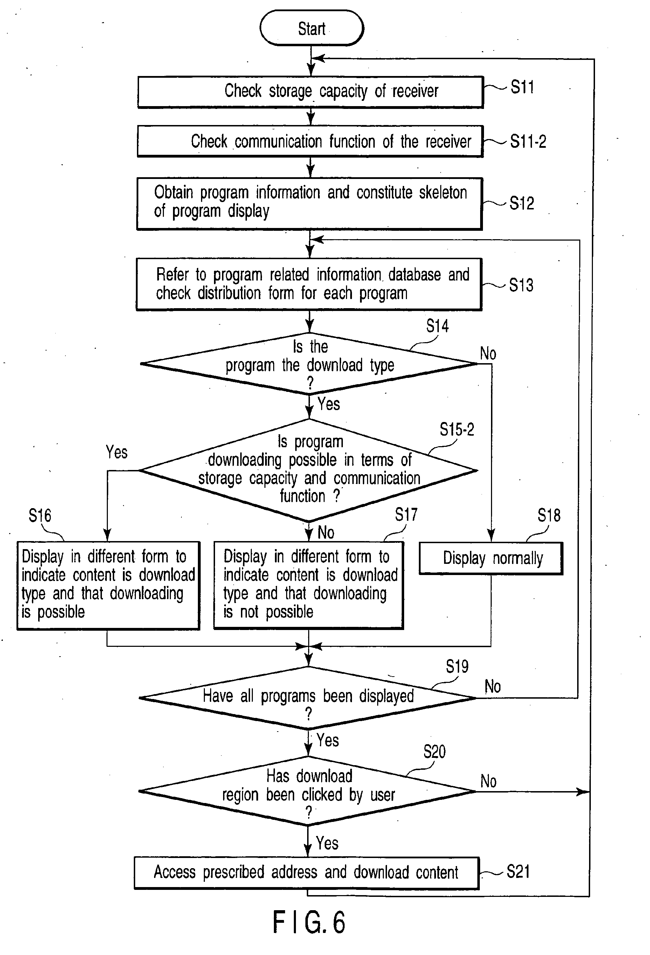

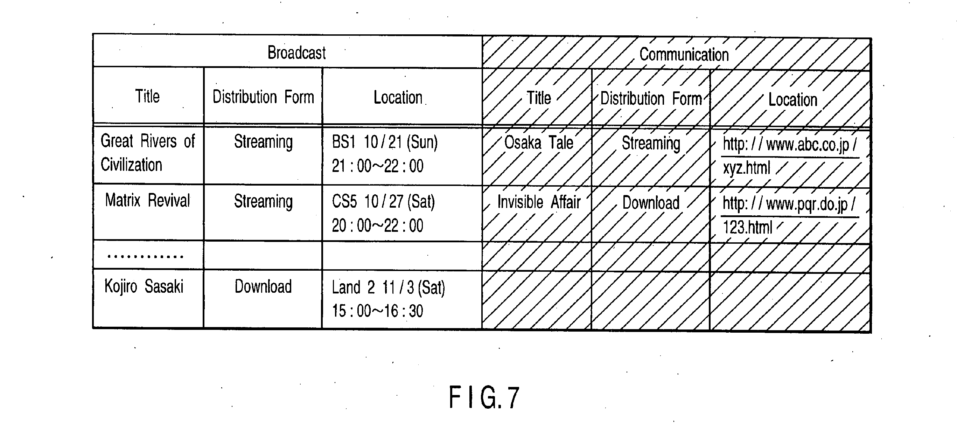

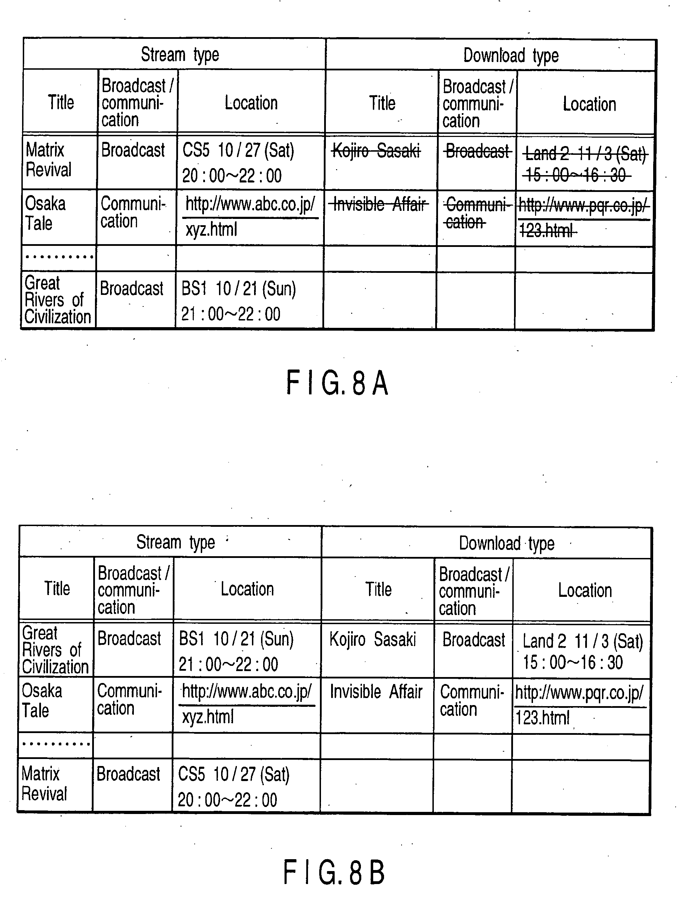

The following is a detailed description of embodiments of this invention with reference to the drawings. FIG. 1 is a block diagram showing an example of a configuration of a broadcast receiving device according to one embodiment of the invention; FIG. 2 is a flowchart showing an example of the processing operation of the broadcast receiving device according to one embodiment of the invention; FIG. 3 is an example of the display of program information of the broadcast receiving device according to one embodiment of the invention; FIG. 4 is another example of the display of program information of the broadcast receiving device according to one embodiment of the invention; FIG. 5 is a flowchart showing an example of the processing operation for checking a communication function of the broadcast receiving device according to one embodiment of the invention; FIG. 6 is a flowchart showing an example of the processing operation for downloading in the broadcast receiving device according to one embodiment of the invention; FIG. 7 shows an .example of the display in which the program information of the broadcast receiving device according to one embodiment of the invention is classified into broadcast and communication; and FIGS. 8A and 8B show an example of the display in which the program information of the broadcast receiving device according to one embodiment of the invention indicates whether downloading is possible.

### <Broadcast Receiving Device of this Invention>

The following is a description of this invention using the drawings, with a broadcast receiving device that has network communication functions and handles program information as an example.

### (Configuration and Basic Operation)

As shown in FIG. 1, the broadcast receiving device comprises: a tuner unit 1 which tunes a predetermined station by receiving broadcast signals RF which are transmitted from the transmitter T of the broadcast station H; a transport processing unit 12 which receives an output from the tuner 11; an MPEG video/audio decoding unit 13 which receives compressed signals from the transport processing unit; and a display control processing unit 14 which receives video and audio signals from the MPEG video/audio decoder unit 13; and an EPG detecting unit 22 which detects the program information from the conversion signal from the transport processing unit 12.

In addition, the broadcast receiving device has a CPU 16 which is connected via each of the devices in order to appropriately perform the signal processing, and a RAM 17, a NVRAM 18, and a ROM 19 are also included. Furthermore, the broadcast receiving device may comprise a modem/LAN 15 which communicates in both directions as necessary by sending the view history to the viewer history collection center (not shown) for pay broadcasts, and for receiving content or program related information and the like from a server S in the broadcast station H or a predetermined communication device, as well as an external input receiving processing unit 21 for inputting operation information from a remote control and the like. Furthermore, the broadcast receiving device comprises a hard disk drive HDD 20 that is connected to the device for the purpose of downloading content information and the like.

In the broadcast receiving device having this type of configuration, the following operations are performed in order to receive the broadcast signals and perform reproduction. In other words, a method is described in the following, in which effective display is done in accordance with the possibility of using the storage functions of the broadcast receiving device using information for distinguishing the distribution form of the content (program) when the broadcast receiving device comprises the EPG screen in an environment where real-time broadcast and server type broadcast services are mixed.

The digital broadcast signals which are input from the RF antenna terminal are input into the tuner unit and converted to IF. The physical channel is selected from among the IF signals, and after A/D conversion, the signals which are digital modulated at the QAM or QPSK transmission side, are demodulated, and as is expected, at the transmission side, encoded signals that have been trellis/Viterbi encoded or RS (Reed Solomon) encoded are subjected to error correction and the like, and outputted to the transport processor 12.

At the transport processing unit 12, a predetermined service which has been specified is selected via the external input processing device 21 such a remote controller and the like from among the generally multiple services (broadcast programs) that have been multiplexed at the TS (Transport Stream) format, and the video and audio signals that comprise the program are multiplexed and separated, and de-packet processing is performed, and the respective signals are made into compressed signals again and output to the MPEG video/audio decoding unit 13. Also, the EPG detecting unit 22 separates program related information such as video, audio and also PSI (Program Specific Information) or SI (Service Information) which have been multiplexed, and XML metadata of the stream signal from the transport processing unit 12 and outputs it to the RAM 17 and the like.

In the case of video, signals which have been subjected to MPEG-2 video compression encoding for example, are decoded at the video/audio compression signal decoding unit 13 and digital component signals such as Y/Cb/Cr or R/G/B and the like are output to the display control processing unit 14. In a similar manner, audio signals also are subjected to audio compression decoding processing and compression encoding such as MPEG, and AC3 and output to the display control processing unit 14. At the control processing unit 14, multiplexing of graphic output with the video signal that has been input is performed if necessary, and the audio signals may be outputted to the display (not shown) after being muted.

It is to be noted that the case where the receiving device is analog output is not shown, but the video/audio output of the display control processing unit 14 may for example, be converted to NTSC analog composite signals via a NTSC encoder after D/A conversion.

The CPU 16 assists the peripheral devices to suitably perform the signal processing. For example, when a predetermined service has been specified via the external input processing unit 21, the PSI data which is demultiplexed, deloaded and displayed on the DRAM 17 via the transport processing unit 12 is analyzed, and the each PID(Program Identities) such as video and audio decoding unit 14 are controlled. At the display control unit 14 in particular, if necessary, processing editing of program related information such as SI that have been reproduced and displayed on the DRAM 17 via the transport processing unit 12 are processed and edited, and instructions are given for creation and display of the EPG (Electronic Program Guide). It is to be noted that information which must be stored even after the power is turned off such as user set information and the like, is saved in the NVRAM. In addition, a set of processing programs and the like are stored in the ROM 19, and when the power is turned ON it is loaded and started.

A modem/LAN 15 communicates in both directions as necessary by sending the view log to the view log collection center (not shown) for PPV (Pay Per View), services, and for receiving content or program related information and the like from a predetermined communication device. In the case of the LAN, wire connection is done via an external xDSL modem or a circuit terminal device or the like (not shown).

In addition, in the case where there is a function for storing programs, the user may specify the starting of program recording by direct or reserve recording via the external input receiving unit 21 such as a remote controller, and the CPU which receives this instruction analyzes the program related information which is given at the same time in the case of real time presentation of the broadcast signal, and each of the transmission distinguishing elements is set at the transport processing unit 12. As a result, at the transport processing unit 12, the necessary signals are multiplexed and separated then output to the HDD 20. It is to be noted that the HDD 20 is an example of a storage media, and other storage media may be used, and also the storage media may be outside of the IRD and connected thereto. In addition, in the case of a storage and reproducing processing device, the user selects the program stored on the HDD 20 either directly or by reserve reproduction, and the program is output to the transport processing unit 12 or the video/audio compression decoding unit 13 in accordance with the signal format of the stored program, and is reproduced in the same manner as for real time reproduction.

If the PSI/SI operates when the program related information is transmitted, a new remarks element. which has information indicating the form of content distribution can be defined in a PMT (Program Map Table) which has all the broadcast programs and their structure, as well as an EIT (Event Information Table) which has event related information.

### <EPG Display Processing of the Invention>

### (Basic display operation of EPG display)

Next, the EPG display process of the broadcast receiving device of this invention will be described in detail using the drawings. In the flowchart of FIG. 2, when the broadcast receiving device receives display instructions from the user via a remote controller based on the program information, empty space on the HDD 20 or the like of the broadcast receiving device is detected due to the operation of the CPU 6 or the display control unit 14, and storage capacity for recording the content to be downloaded and the like is checked and the operation state of communication devices such as the modem and the like are also checked (S11). Next, a program chart skeleton for EPG display is formed which has 2 axes for broadcast channel and broadcast time (S12). Here the default settings for the font and background color of the region for the program title and the like have been determined. Next, the database inside the receiver for the program information which has been obtained and created from the SI and the like is referred to and for each display program, the content distribution form (whether downloading is necessary) and distinguishing information for indicating the size of the content is checked (S13), and a determination is made as to whether downloading is possible (S14). If at this point, a determination is made that the content cannot be downloaded, the program is displayed in the usual manner (S18).

In step 14, if a determination is made that the program is the download type, the size of the space in the storage region where downloading of the content is possible and the size of the content are compared (S15). At this time, if a determination is made that downloading is possible because the size of the empty recording region on the HDD 20 and the like to which downloading of content is possible is sufficiently larger than the size of the content, the content is download-type and is displayed in the EPG program display which indicates downloading is possible (S16). Also, if a determination is made that downloading is not possible because the size of the empty recording region on the HDD 20 and the like to which downloading of content is possible is not sufficiently larger than the size of the content, or if there is no empty region, the content is download-type and is displayed in the EPG program display which indicates that downloading is impossible (S17).

Different background colors for the content display P1, P2, P3, P4, P5, P6 in the program display 31 shown in FIG. 3 indicates that the content (program) is the download type. Also, it is favorable for the display showing this download type to be shown using different font sizes and types as well as text effects.

Also, different background colors, for the content display P1, P2, P3, P4, P5 and P6 in the program display 32 shown in FIG. 4 indicate that the content (program) is the downloadable content type. In the same way, the display indicating the content type is preferably shown with different font sizes and font types as well as text effects. Furthermore, in FIG. 4, the double circles at content display P1, P2 and P5 indicate that-there is download capability because there is sufficient empty space on at least the hard disk drive HDD 20, and download signals are received at the receiver and thus use is possible. Also, for content display P3 and P4, the display "insufficient capacity" indicates that there is no downloading capability and downloading is not possible because the empty space on the hard disk drive HDD 20 is insufficient. At this time, the display indicating whether there is downloading capability is not limited to that shown in FIG. 4, and for example it is preferable that the background colors, the font size and type and text effects are shown so as to be even more different.

In this manner, in the broadcast receiving device of this invention, in the program display of the program information shown in FIG. 3 and FIG. 4, the content which is provided by the transmitter T and the server S at the broadcast station H are displayed with distinguishing background colors and fonts so that content can be identified as download type at a glance. Also, the background color and font are displayed so as to be different based on whether the broadcast receiving device has a storage function. Thus, by simply viewing the program display of the program information, the user can intuitively determine the form for receiving and using the content (whether the content is the down load type) and whether or not downloading is possible.

### (When Communication Function Is Also Checked)

In addition, in the flowchart of FIG. 5, as is the case in FIG. 4, at Step S11, not only is the storage capacity of the hard drive of the receiver checked, but also the communication functions of the modem/LAN 15 and the tuner unit 11, and the transport processing unit 12 as well as the operation status of the data retrieving function and the like are checked (S 11-2). Checking the communication function at this time preferably involves not only determining whether communication is possible by physically connecting a communication.cable or establishing a session, but also checking whether communication speed is sufficient for downloading content or checking the current condition of operation stability. Thus, in Step S 15-2, involves not only the storage capability of the HDD 20, but also communication capability of the modem/LAN 15, and displaying is done in Step S16 to Step S18 based on the results of the checking.

### (When there is Instruction for Downloading)

Furthermore, in the flowchart of FIG. 6, in addition to the operations of the flowchart of FIG. 5, by specifying (clicking) the region for content display P1 and the like in FIG. 4 on the screen via an external input receiving processing unit 21 such as a remote controller (S20) downloading of the target content is started (S21). This operation is controlled by the CPU 16, and when there is a determination that there is download start instructions, in the case where the modem/LAN 15 is used, the modem/LAN 15 or the like accesses a server on the network based on the URL retrieved by the EPG detecting unit 22 from the program information and the like, and the content is downloaded and stored in a storage region such as the HDD 20 and the like. In the case where the tuner 11 and the transport processing unit 12 are used, content is received and retrieved from the broadcast signals that are selected by the tuner 11 and stored in the HDD 20 via the transport processing unit 12.

It is to be noted that in each of the above examples, whether the storage function in the receiver can be used is determined based on the empty space size in the HDD, but in the case where there is no HDD connected, or when the HDD is damaged, if the determination is done based the whether access on the file system is possible, and there is no substantial difference when this method is used.

### (Program Display Including Distribution Form)

In FIG. 7, when program displaying is done in accordance with program information, the content is supplied as broadcast signals, but depending whether the content is supplied as communication signals, the content may be displayed in rows or columns to distinguish them. That is to say, in the program display of FIG. 7, due to the processing operations of the display control processing unit 14, the distribution form of content provided as broadcasts signals based on program information is displayed such that the case where the distribution form is the stream type (streaming) which is not based on storage and receiving at the receiver, and also in the case of download (download type) which is based on storage and receiving is indicated, and URL information which indicates the respective content location is shown.

In addition, the entire communication row is shown as diagonal lines because if for some reason, the communication unit cannot be used at the receiver and content retrieval and use is not possible, this is indicated.

As described above, by performing control processing and display using the distinguishing information which indicates content distribution form, it is clear which programs and services cannot be used currently in the broadcast receiving device which is in a state where the communications functions cannot be used, and this improves convenience for users when selecting programs.

It is to be noted that, even for the broadcast receiving device that is in a state where the communication functions can be used, because the receiving form of the service can be distinguished as either stream type or download type, it is easier for the user to make a determination when there are distinguishing marks. Furthermore, although the distinction is described as meshing above, it is also favorable for a strong distinction to be made by font style or by text effects such as strikethrough lines.

### (When storage function/communication function is always checked and reflected in the display)

In step S20 in the flowchart of FIG. 6, if there is no region instruction from the user, the process returns to Step S11, and once again, the storage function and the communication function of the broadcast receiving device are checked, and content that can be received and downloaded is determined based on the most recent function checking results. As a result, as shown in the display example of FIG. 8A, even when information such as title, broadcast form, location and the like are displayed for content which cannot be downloaded with text effects such as strikethrough lines, due to the subsequent checking process, in (b), for content which has become capable of being downloaded, the strikethrough line for information such as title, broadcast form, location and the like is erased and the content is now displayed as downloadable.

The case where a UPnP (Universal Plug and Play) and the like is used and a storage device on a home network is monitored, and display screen control of the broadcast receiving device is performed based on the use possibility status is used to describe this type of example where the content becomes usable at a later time.

The broadcast receiving device corresponds to the UPnP, but in the case where a broadcast receiving device that does not have a storage function is connected, at first there is no storage device connected to the home network, and because a storage function cannot be used, as shown in FIGS. 8A and 8B, the display screen for content selection is displayed with the text effects of strikethrough lines to indicate that the download type content cannot be used.

If a storage device such as a HDD or the like is connected to the IP corresponding to the UPnP on the home network, the storage device requests assignment of an IP address to the DHCP (Dynamic Host Configuration Protocol) server and the IP address is obtained. Next, the fact that the storage device itself has been connected to the network is communicated by multicast, and the broadcast receiving device and other devices are detected by a protocol called SSDP (Simple Service Discovery Protocol). Subsequently, detailed information such as the name of the maker and function of the device is sent between devices that have detected each other, and appropriate and necessary controls are thereby performed.

In this manner, connection of the storage device is detected and becomes usable via the network, the display is changed such that as shown in FIG. 8B in the broadcast receiving device, download type content as well as stream-type content are displayed to indicate that they can be used in a similar manner

It is to be noted that the UPnP performs the above-mentioned multicasting at predetermined periods and the connection status of each of the devices is viewed, and there is a subscriber list that communicates events when there is a change in equipment status. When the storage device cannot be used because of insufficient empty space or the like, or when the broadcast receiving device and the storage device is disconnected from the home network, the broadcast receiving device receives event notification or detects that the notification is no longer being received, and thus cancels list registration, and as shown in FIG. 8A, the user may be notified that the download type content can no longer be used.

The display control process at this time is basically the same as in FIG. 2, but this embodiment is different in that the status of the possibility for use of the download type content is determined dynamically, and the display screen is suitably updated.

It is to be noted that use of the home network that uses the UPnP was described above, but a local connection of a broadcast receiving device according to IEEE1394 and storage device may also be used. In addition, in the above description, whether storage function is possible is determined and the display screen reflects the changes, but there is no substantial difference when communication function such as the connection status is determined and the display screen reflects the changes.

One skilled in the art may apply this invention using the various embodiments described above, and various modifications of this invention will readily occur to those skilled in the art, and furthermore various applications of the embodiments are possible even without inventive capability. Accordingly, the present invention is not to be limited by the above embodiments and includes broader aspects provided there are no inconsistencies with the principles and new features disclosed herein.

For example, in this embodiment, the process where the EPG effectively displays in accordance with whether the storage function can be used, but in the case where content which is distributed via communication is broadcast content of the past and the information for distribution is transmitted by broadcasting, program information and content information for past broadcast content can be displayed on the screen. The present invention is also applicable in the screen display for this type of past broadcast content, and by the content not being displayed or background color or the like, the user can be provided with information indicating whether content can be reproduced. In addition, banner display which is independent of EPG is possible when viewing programs or when switching channels, and this is also convenient for the user.

## Claims

1. A broadcast receiving device **characterized by** comprising:
a receiving unit (11, 12, 13) which receives and demodulates broadcast signals and outputs encoded signals;
an acquiring unit (11, 12, 15, 22) which acquires program information relating to the broadcast signals received at the receiving unit;
a detecting unit (22) which detects storage function necessity information which indicates whether storage function is required at the receiver for receiving and using the content for each item of program information;
a determining device (15, 16, 20) which determines whether or not the broadcast receiving device has a capability required for downloading the contents; and
a display control unit (14) which outputs video signals of the program information screen (FIG. 4) to which the storage function necessity information detected by the detecting unit and the download capability information from the determining unit is added to each content.

2. A broadcast receiving device according to claim 1, **characterized by** further comprising:
a communication unit (15) which makes a communication with an external device via a network and downloads the content; and
a recording unit (12) which records the content downloaded by the communication unit in a storage region,
wherein the determining unit determines whether or not there is downloading capability based on whether the empty space in the storage region of the recording unit is larger than the content volume.

3. A broadcast receiving device according to claim 1, **characterized by** further comprising:
a second determining unit which determines whether or not there is download capability by whether the communication unit has communication capability for downloading.

4. A broadcast receiving device according to claim 1, **characterized in that** the display control unit shows information indicating whether or not downloading of each content is possible or information indicating whether or not there is download capability by font type of text effects on the EPG screen which is the program information.

5. A broadcast receiving device according to claim 1, **characterized in that** the display-control unit shows information indicating whether or not the storage function is necessary or information indicating whether or not there is a download function by font type or text effect on an EPG screen which is the program information.

6. A broadcast receiving device according to claim 1, **characterized by** further comprising:
a communication unit (15) which makes communication with an external device via a network and downloads the content;
a recording unit (12) which records the content downloaded by the communication unit in a storage region; and
a control unit (16) which controls the downloading process to be started by the communication unit and the recording unit by performing an operation by clicking an input unit of the display portion of the content which is capable of being downloaded on the EPG screen which is the program information.

7. The broadcast receiving device according to claim 1, **characterized in that** the display control unit creates the program information screen as a table (FIG. 7) with the content for which the storage function is not necessary and the content for which the storage function is necessary in the receiver in different rows or columns.

8. The broadcast receiving device according to claim 1, **characterized in that** the display control unit performs the determination of the determining unit every predetermined period, and the information indicating whether or not downloading is possible and the information indicating whether or not there is downloading capability is updated based on the most recent determination.

9. The broadcast receiving device according to claim 1, **characterized in that** the program information is obtained by extraction from the broadcast signal received by the receiving unit, or obtained by using the communication unit (15) which makes communication with an external device via a network.

10. The broadcast receiving device according to claim 1, **characterized in that** the display control unit displays (FIGS. 8A and 8B) URL information for communication at the time of downloading at the screen based on the program information.

11. A display method of a broadcast receiving device, **characterized by** comprising:
acquiring program information related to broadcast signals;
detecting from the program information whether or not downloading of each content is possible;
determining whether or not the broadcast receiving device is capable of downloading content which can be downloaded;
creating a program screen based on the program information and displaying on the program screen, information indicating whether or not a storage function is required at the receiver when receiving and using each content or information indicating whether or not there is downloading capability.

12. A display method according to claim 11, **characterized in that**
a determination is made as to whether or not there is downloading capability based on whether or not a storage region for downloading the content of the broadcast receiving device is larger than the content volume.

13. A display method according to claim 11, **characterized in that** a determination is also made as to whether or not the broadcast receiving device has download capability based on whether or not the communication unit which performs communication that is included in the broadcast receiving device has communication capability for downloading.

14. A display method according to claim 11, **characterized in that** the information indicating whether or not there is a storage function for each content or the information indicating whether or not there is downloading capability is shown by font type or text effect of an EPG screen which is the program information.

15. A display method according to claim 11, **characterized in that** the information on whether or not the storage function is necessary for each content or information indicating whether or not there is download capability is expressed as difference in background color of the EPG screen which is the program information.

16. A display method according to claim 11, **characterized in that** control for starting downloading is done by the user performing an operation by clicking the display portion of the content which is capable of being downloaded on the EPG screen which is the program information.

17. A display method according to claim 11, **characterized in that** the EPG screen which is the program information is created as a table with the content for which the storage function is not necessary and the content for which the storage function is necessary in different rows or columns.

18. A display method according to claim 11, **characterized in that** the determination as to whether or not the broadcast receiving device has downloading capability is performed every predetermined period, and the information indicating whether or not there is a storage function and the information on whether or not downloading is possible are updated and displayed based on the most recent determination result.

19. A display method according to claim 11, **characterized in that** the program information is acquired by extraction from the broadcast signals received by the broadcast receiving device, or acquiring by communicating with an external device via a network.

20. A display method according to claim 11, **characterized in that** URL information for communication at the time of downloading is displayed (FIGS. 8A and 8B) on the screen based on the program information.
